# EUROPÄISCHE PATENTSCHRIFT

(11) **EP 0 446 808 B1**
(45) Veröffentlichungstag und Bekanntmachung des Hinweises auf die Patenterteilung: **19.04.1995**
(21) Anmeldenummer: 91103587.1
(22) Anmeldetag: 08.03.1991
(51) Int. Cl.: G01J 3/46, G01N 21/86, G01N 33/36

(54) **Verfahren und Vorrichtung zur Messung der Eigenfarbe von Faserbändern**
Method and apparatus for measuring the colour of fibre slivers
Procédé et dispositif pour mesurer la couleur des mèches de fibres

(30) Priorität: 12.03.1990 CH 786/90; 19.04.1990 CH 1319/90
(43) Veröffentlichungstag der Anmeldung: 18.09.1991
(73) Patentinhaber: MASCHINENFABRIK RIETER AG, CH-8406 Winterthur (CH)
(72) Erfinder: Anderegg, Peter, CH-8400 Winterthur (CH); Moser, Robert, CH-8405 Winterthur (CH); Faas, Jürg, CH-8474 Dinhard (CH)

(56) Entgegenhaltungen:
- DE-C- 956 613
- GB-A- 2 020 423
- US-A- 3 336 481
- US-A- 3 496 366
- US-A- 3 729 375
- US-A- 4 194 840
- PATENT ABSTRACTS OF JAPAN vol. 7, no. 146 (P-206)(1291) 25. Juni 1983 & JP-A-5858442

## Beschreibung

Die Erfindung liegt auf dem Gebiete der Textiltechnik und betrifft ein Verfahren und eine Vorrichtung zur on-line Farbmessung an Fasergut, insbesondere Faserbändern.

Farbmessungen an den verschiedensten Materialien sind eine weitverbreitete Technik. So sind denn auch Farbsensoren für die verschiedensten Anwendungen auf dem Markte erhältlich, die für Labormethoden und für on-line Methoden für Prozessüberwachung und -Steuerung eingesetzt werden können. Solche Farbmessungen sind an kompakten Materialien mit glatten Oberflächen problemlos, verlangen aber für lose (bspw. Pulver), stark poröse (bspw. Sinterkörper) Materialien eine standardisierte Probenvorbereitung. So zeigt es sich zum Beispiel, dass watteartige Materialien nur dann sinnvolle, reproduzierbare Farbmesswerte ergeben, wenn sie in einer möglichst standardisierten Form einem Farbsensor zugeführt werden. Solche standardisierten Farb-Messungen werden denn auch an stationären Proben von Fasermaterial im Gebiet der Textiltechnik durchgeführt.

Auf verschiedenen Stufen der Textilherstellung werden Farbmessungen durchgeführt und die Messdaten zur Prozessüberwachung oder -steuerung ausgenützt. Im Bereiche des Spinnereivorwerkes, speziell an Faserbändern, wären on-line Farbmessungen vorteilhaft, sind aber bis anhin nicht durchgeführt worden, weil kein Verfahren bekannt ist, um an den kontinuierlich sich bewegenden Faserbändern die für die notwendige standardisierte Probenvorbereitung unumgängliche Manipulation durchzuführen, ohne dass die Faserbänder dadurch bleibend verändert werden oder der Prozess störend beeinflusst wird. Eine bleibende Veränderung des zu messenden Faserbandes kann aber unter keinen Umständen akzeptiert werden, sowohl weder in bezug auf die Masse des Bandes pro Längeneinheit noch auf seine Dichte, also auch weder in bezug auf die Orientierung der Fasern noch auf ihre Wirrlage.

Aus der US-Patentschrift Nr. 3,496,366 ist ein Messgerät zur Messung der Faserfeinheit (Masse pro Längeneinheit) an einem textilen Material bekannt, bei welchem das Fasermaterial mit einer Lichtquelle auf der einen Seite eines Messkanals beleuchtet wird und das vom Material durchgelassene Licht auf der anderen Seite von einer Fotozelle gemessen wird. Um Verschmutzungen zu verhindern, sind anstatt durchsichtige Fenster drehende, lichtdurchlässige Scheiben vorgesehen, innerhalb welcher die Lichtquelle und die Fotozelle angeordnet sind. Ferner ist eine zweite Fotozelle vorgesehen, um das Licht direkt von der Lichtquelle zu messen, das heisst um ein Referenzsignal zu bilden.

Es ist nun Zweck der Erfindung, ein Vorgehen aufzuzeigen und die vorrichtungsmässige Realisierung zu schaffen, durch die ein kontinuierlich sich bewegendes Fasermessgut für eine die Farbmessung zulassende konditionierte Form an einer Messstelle vorbeigeführt werden kann, damit die Farbe eines solchen Faserbandes mit einem handelsüblichen Farbsensor on-line gemessen werden kann. Die Messung soll reproduzierbare, genaue Messdaten liefern. Eine allfällige, für die Messung notwendige Konditionierung des Faserbandes darf weder den Prozess noch das Faserband nachteilig beeinflussen. Auch nachdem das Faserband die Messstelle passiert hat, soll es in bezug auf alle seine Eigenschaftsparameter den Forderungen des Prozesses entsprechen. Der Messeingriff darf das Faserband insbesondere nicht bremsen, denn das führt zu einer nachfolgenden Streckung der Faseranordnung im Band. Die Mess-Vorrichtungen sollen an bestehenden Prozess-Vorrichtungen, die Faserbänder produzieren, transportieren oder verarbeiten, derart angeordnet werden können oder einbaubar sein, dass sie den Betrieb der entsprechenden Prozess-Vorrichtungen nicht stören.

Im Folgenden sollen mögliche Vorgehensweisen zur Farbmessung während des Herstellungs-Prozesses und einige Ausführungsformen von erfindungsgemäss ausgestalteten Mess-Hilfsvorrichtungen diskutiert und beschrieben werden. Die folgenden Figuren zeigen:
- **Fig.1**: a bis d mögliche Verfahrensvarianten in schematischer Darstellung.
- **Fig.2**: eine Möglichkeit der Konditionierung des Messgutes, die eine prozessbedingte Bandkompression ausnützt.
- **Fig.3**: a und b einige Details zu einer Mess-Hilfsvorrichtung zur Realisierung einer Farbmessung, wie in Figur 2 gezeigt.
- **Fig.4 a bis d**: Ausführungsformen für Hilfsvorrichtung für Reinigung und Eichung des Farbmess-Sensors oder der Mess-Hilfsvorrichtungen.
- **Fig.5**: einen anderen bevorzugten Messort im selben Bereich des Faserbearbeitungsprozesses (die Band- oder Kannenablage), an welchem das Messgut eine prozesseigene Kompression erfährt und
- **Fig.6**: a und b eine Messanordnung an dem in Figur 5 dargestellten Messort zeigen.

Farbmessungen an stationären Proben von Faserbändern zeigen, dass reproduzierbare Messwerte dann erhalten werden, wenn die Bänder bspw. auf einen standardisierten Kompressionsgrad komprimiert werden und wenn die Bänder rsp. die in den Bändern enthaltenen Fasern gegenüber dem Messgerät immer die gleiche Orientierung aufweisen. Die Messungen sind genau und reproduzierbar, wenn die Messsonde ausserdem staubfrei gehalten und mit einer für das zu messende Material, rsp. die zu messende Farbe, geeigneten Eichfarbe geeicht wird. Für die Messungen eignen sich als Farbmessgeräte beispielsweise die Minolta Chroma-Meter, insbesondere die Typen CR-200 und CR-210. Dies sind Farbmessgeräte mit einer Xenon-Blitzlampe zur diffusen Beleuchtung der Probenfläche, mit einem Messsystem, das nur senkrecht zur Probenfläche einfallendes Licht auswertet und einer Messelektronik, die Schwankungen der Messbeleuchtung automatisch kompensiert. Für das Messprinzip solcher Farbmessgeräte und für die Interpretation der Messresultate sei auf die einschlägige Literatur verwiesen.

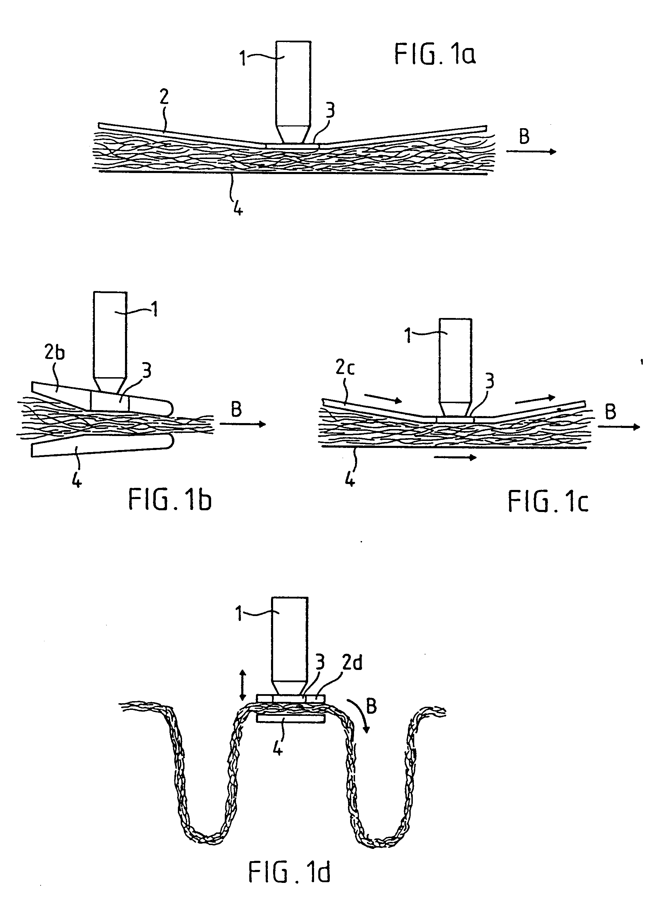

Das hier diskutierte Vorgehen (siehe Figur 1a) überträgt die an stationären Proben gemachten Erkenntnisse auf sich kontinuierlich bewegende Faserbänder. Für die kontinuierliche Farbmessung werden mit Vorteil dieselben Farb-Messgeräte benutzt, die für stationäre Farbmessungen verwendet werden. Dazu muss natürlich der Messvorgang entsprechend verändert werden, was Gegenstand der Erfindung ist.

Die Messsonde 1 wird senkrecht zur Bandlaufrichtung B angeordnet und die Bandoberfläche in konstantem Abstand dazu vorbeigeführt. Solange die Faserlage im Faserband konstant ist, bleibt die Bedingung der konstanten Faserorientierung erfüllt. Das Faserband wird, bevor es die Messstelle durchläuft, durch Komprimierungsmittel 2 leicht komprimiert. Die Farbmessung wird durch einen entsprechend transparent gestalteten Vorrichtungsteil 3 (bspw. Plan-Scheibe) hindurch gemacht oder durch eine kleine Öffnung (ohne Planscheibe) zwischen den Komprimierungsmitteln, welche entsprechend der Faserlänge so klein gewählt werden muss, dass das Band sich nicht in die Oeffnung entspannt, während es an solch einer Mess-Öffnung vorbei bewegt wird. Durch entsprechende Ausgestaltung der Komprimierungsmittel, seien sie nun prozessbedingt oder rein messungsbedingt, wird dafür gesorgt, dass an der Messstelle das Band eine genügende Breite hat, um die ganze Messöffnung der Farbmesssonde zu decken. Die Farbmessung wird präziser, je weniger optische Grenzflächen im Strahlengang des Beleuchtungs- und Messlichtes angeordnet sind.

Für die Komprimierung des Faserbandes im Gebiete der Messstelle stehen verschiedene Vorgehensvarianten zur Verfügung (siehe dazu die CH-Patentanmeldung Nr. 00′786/90-5, die in umfassender Weise mehrere Varianten zur kontinuierlichen Farbmessung an Faserbändern beschreibt). Nach einem Vorgehen gemäss Figur 1b wird die Messung an einer Prozessstelle durchgeführt, an der das Faserband prozessbedingt komprimiert wird, wo also das Komprimierungsmittel 2b, zum Beispiel ein Band-Trichter, einen prozesseigenen Vorrichtungsteil darstellt. Nach einem Vorgehen gemäss Fig. 1c wird die Messung in einem beliebigen Prozessabschnitt durchgeführt und das Faserband wird im Gebiete der Messstelle bremsungsfrei komprimiert, bspw. Zwischen mit dem Band mitlaufenden Komprimierungsmitteln 2c. Nach einem Vorgehen gemäss Figur 1d wird die Messung an einer Prozessstelle durchgeführt, an der das Faserband lose hängt, sodass es für die Messung kurz angehalten und zwischen stationären Komprimierungsmitteln 2d komprimiert werden kann.

Gemäss der hier bevorzugten Variante wird die Messung an einer Prozessstelle durchgeführt, an der das Faserband prozessbedingt komprimiert vorliegt, wo also das Komprimierungsmittel, zum Beispiel eine Bandablage-Vorrichtung, einen prozesseigenen Vorrichtungsteil verkörpert.

Da das Faserband in den meisten Fällen auch in komprimiertem Zustand nicht absolut kompakt und undurchsichtig ist, beeinflusst die Farbe des Hintergrundes, d.h. der Fläche 4, die der Messsonde gegenüber auf der anderen Seite des Faserbandes liegt, einen Teil des rückgestrahlten Lichtes und damit die Farbmessung. Die günstigste Farbe für die Faserhintergrundsfläche ist jeweils vom auszumessenden Material abhängig. Ein definiertes "Weiss" erweist sich in den meisten Fällen als günstige Hintergrundsfarbe. Die Messwerte der Farbmessung können dann einer materialabhängigen Korrektur unterzogen werden, die in Abhängigkeit der "Durchsichtigkeit" des Faserbandes und anderer Faserbandeigenschaften (Material, Faserquerschnitt) den Einfluss der Hintergrundfarbe auf die Messung kompensieren. Bei einer der hier vorgeschlagenen Vorgehensweisen wird der Umstand des Einflusses der Hintergrundwirkung und die daraus entstehenden Gegenmassnahmen zur messtechnischen Elimination der Hintergrundwirkung elegant umgangen. Dies, in dem eine Messstelle in einem Prozessabschnitt benützt wird, bei der auch die maximale Messtiefe vom Messgut umfasst wird und dadurch keine Rückstrahlungsfarbkompensation nötig ist.

Vor und während der Messung wird das Farbmessgerät geeicht. Beispielsweise wird eine Fläche, die eine bestimmte Eichfarbe hat, periodisch ausgemessen. Die Eichfarbe ist entsprechend dem Material des Messgutes zu wählen, wobei auch hier in der Regel ein definiertes "Weiss" verwendet werden kann. Die Eichung erfolgt durch Zusammenführen der Eichfläche mit dem Messbereich der Messsonde, bspw. durch Ausschwenken der Messsonde über die Eichfläche oder umgekehrt, der Eichfläche unter die Messsonde oder durch optische Projektion eines entsprechenden Farbfleckes in den Bereich der Messsonde. Die Häufigkeit, mit der eine Eichung durchgeführt werden muss, ist von den Anforderungen, die an die Farbmessung gestellt werden, abhängig. Für Fälle mit niedrigen Anforderungen wird es genügen, die Eichung off-line, bei Stillstand oder Wartung manuell durchzuführen. Für höhere Anforderungen muss die Eichung häufiger, vorteilhafterweise automatisch durchgeführt werden. Dies kann gesteuert, das heisst in regelmässigen Abständen (Stunden, Tage, Wochen) oder geregelt, das heisst nach definierten anderen Messkriterien (bspw. Änderung der Leistung der sondeninternen Blitzlampe, Schwankungen in der Umgebungstemperatur) durchgeführt werden.

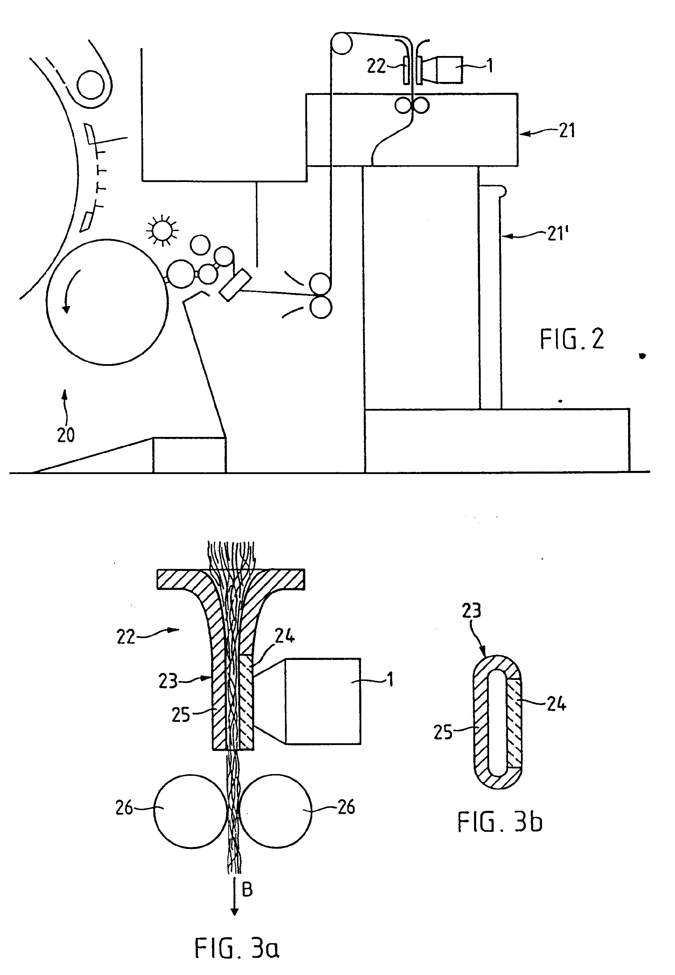

**Figur 2** zeigt eine Messstelle an der Bandablage, mit einer ersten Stelle, an der eine prozessinhärente Komprimierung des Messgutes stattfindet. Für die Komprimierung des Faserbandes wird die Komprimierung im Einlauftrichter ausgenützt, es wird also eine Verfahresvariante gemäss Figur 1b angewendet. Sie zeigt den Ausgang des Faserbandes aus einer Karde 20 und seine Zuführung zu einer Bandablagevorrichtung 21 auf einer Kanne 21′. Die Farbmesssonde 1 ist am Trichter 22 der Bandablagevorrichtung installiert. Der Trichter 22 ist wie aus Fig. 3a ersichtlich für diesen Zweck speziell ausgestaltet. Der Trichterhals 23 ist als Messküvette ausgebildet. Damit das durchlaufende Band eine für die Farbmessung genügende Breite aufweist, hat der Trichterhals 23 den in Fig. 3b gezeigten Querschnitt mit der Form eines sehr flachen Rechteckes mit abgerundeten Ecken. Die der Messsonde zugewandte breite Seite 24 des Trichterhalses 23 besteht aus einem durchsichtigen Material, die gegenüberliegende Seite 25 trägt gegen das Faserband gewandt eine auswechselbare Fläche in der geeigneten Hintergrundfarbe. Auf den Ablagetrichter folgt in Bandlaufrichtung ein Paar Transportrollen 26. Obschon bei diesem Vorgehen die prozesseigene Komprimierung ausgenützt wird, ist die Messtiefe noch innerhalb eines kritischen Bereiches, in welchem der farbliche Hintergrundeinfluss noch wirksam ist. Ein anderes Vorgehen mit einer Messstelle an eine zweite prozessinhärente Komprimierung stattfindet, welches Vorgehen weiter unten noch diskutiert wird. Diese Vorgehensweise ist auch auch gegen diesen Hintergrund-Einfluss resistent.

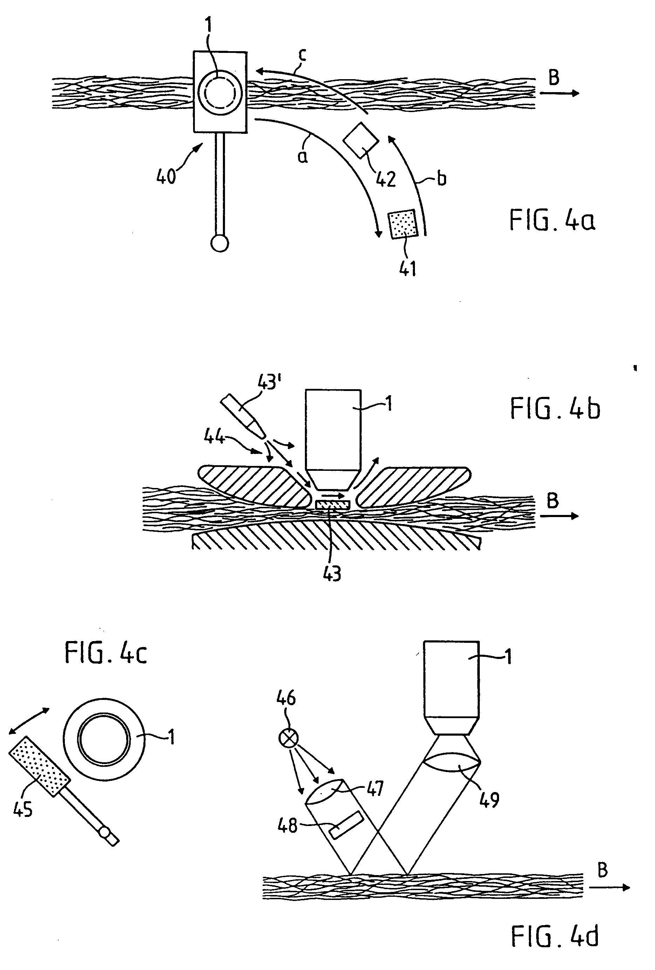

**Figuren 4** zeigen vorher noch verschiedene beispielhafte Ausführungsvarianten von Teilen einer Vorrichtung, die der Eichung und der Reinigung der Farbmesssonde dienen. Figur 4a zeigt eine schwenkbare Befestigungsvorrichtung 40 für die Messsonde 1, die es erlaubt, für manuelle oder automatische Reinigung und Eichung die Messonde aus ihrer Messposition zuerst (Schwenkung gemäss Pfeil a) über ein mechanisches Reinigungselement 41, bspw. eine Bürste, dann (Schwenkung gemäss Pfeil b) über eine Eichfläche 42 und (Schwenkung gemäss Pfeil c) zurück zur Messposition zu bewegen. Ein entsprechender kombinierte Reinigungs- und Eichvorgang kann mit entsprechenden automatisierten Antriebsmitteln genügend schnell durchgeführt werden, dass die Serie von on-line Farbmessungen nicht unterbrochen wird.

Figur 4b zeigt eine kontinuierliche Reinigungsvorrichtung für die Messsonde 1. Aus einer entsprechend angeordneten Düse 43 wird ein konstanter Luftstrom 44 zwischen Messsonde 1 und Faserband oder zwischen Messsonde 1 und durchsichtiger Platte 43 geblasen, der dafür sorgt, dass sich kein Staub in der Messöffnung der Messsonde absetzt und die Messung verfälscht.

Figur 4c zeigt eine beispielhafte mechanische Anordnung zur Reinigung der Messöffnung der Messsonde. Eine entsprechend schmal gestaltete Bürste 45 wird manuell oder automatisch über die Messöffnung der Messsonde 1 geschwenkt.

Figur 4d zeigt eine Vorrichtungsanordnung, mit deren Hilfe für Eichzwecke das Bild eines Farbflecks auf das durchlaufende Faserband projiziert werden kann. Eine Lichtquelle 46 wird mit Hilfe einer Linse 47 auf dem Faserband als Farbfleck abgebildet, indem die Lichtqelle farbiges Licht aussendet oder die Linse als Farbfilter ausgestaltet ist. Der Farbfleck wird entweder an diejenige Stelle projiziert, an der die Farbe des Bandes durch die Messsonde 1 gemessen wird, oder er wird durch weitere optische Vorrichtungen, bspw. Linse 49, in der Messöffnung der Messsonde 1 abgebildet. Eine Glanzfalle 48 verhindert, dass das Eichbild durch reflektiertes Licht verfälscht wird. Diese Vorrichtung kann gleichzeitig zur Beleuchtung des Messgutes verwendet werden.

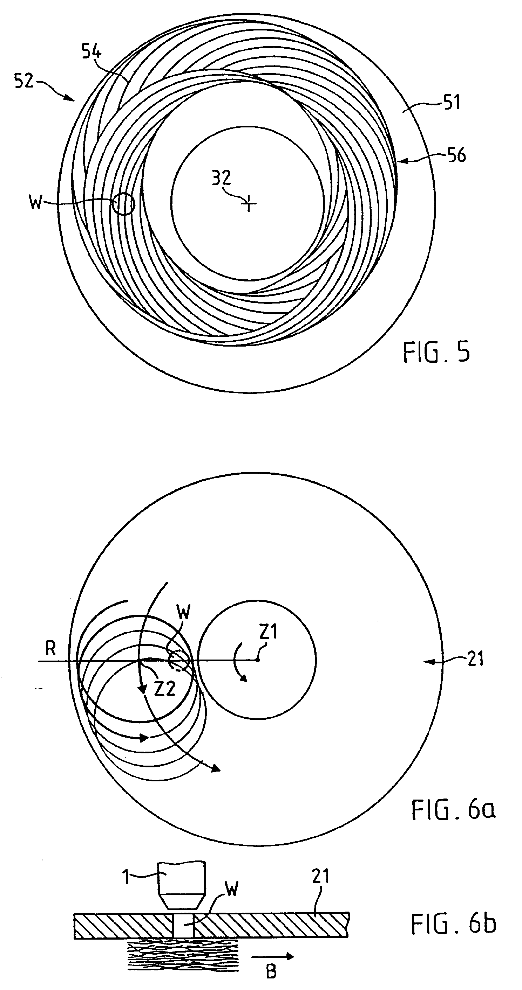

**Figur 5** zeigt schematisch eine andere bevorzugte Messstelle im Bereich der Bandablage, in welchem Bereich sich ein Prozessabschnitt besonders gut für die Messung von Faserbändern eignet. In der Kannenablage wird das Faserband zwischen dem Kannenboden und dem Bandablageoberteil spiralförmig zu einem geordneten "Bandkuchen", das ist eine bestimmte Form einer kontinuierlichen Ablage des Bandes, abgelegt und zusammengepresst. Letzteres, in dem ein verschiebbarer Kannenboden das Band von unten gegen den Oberteil drückt, wobei gleichzeitig das Faserband kontinuierlich zwischen Bandkuchen und Bandablageoberteil eingebracht wird. Zwischen der sich ständig neu bildenden Oberfläche des Bandkuchens und dem Bandablageoberteil findet eine Relativbewegung statt; der Bandkuchen dreht sich um die Kannenachse und beim Ablegen des Faserbandes wird so immer neues Fasermaterial am Bandablageoberteil vorbei bewegt. Hier sind prozessseitig günstige Messbedingungen. Wird nun im Bandablageoberteil eine Mess-Hilfsvorrichtung, bspw. eine Messöffnung W angeordnet, durch welches das von unten an den Bandablageoberteil angepresste Fasergut beleuchtet und gemessen werden kann, so ist es möglich, das sich ständig selbst für die Messung vorbereitende und selbsterneuernde Fasergut ohne jeglichen Eingriff in den Prozessablauf zu messen. Das fortlaufend abgelegte Faserband wird kurz nach dem Ablegen am Sensor vorbeigeführt und kann von diesem gemessen werden. Das Messfenster ist an der Schnittstelle mit dem Messgut selbstreinigend und sensorseitig kann eine der oben, im Zusammenhang mit den Figuren 4 diskutierten Reinigungs- und Eichvorrichtungen angeordnet werden. Damit wird die Messöffnung im Bandablageoberteil entweder kontinuierlich von Staub befreit, beispielsweise indem ein Luftstrahl daran vorbei geführt wird, oder diskontinuierlich mit einem mechanischen Reinigungswerkzeug, beispielsweise einer Bürste. Die diskontinuierliche, mechanische Reinigung der Messöffnung kann wie die Eichung entweder off-line und manuell durchgeführt werden oder automatisch gesteuert oder geregelt. Die Vorteile dieser Mess-Stelle sind einerseits, dass das Messgut "undurchsichtig" ist, das heisst, die Schichtdicke und Schichtdichte des Fasermaterials ist so gross, dass der Hintergrundeffekt wegfällt, und dass die Fasern des Messgutes (nach der Karde) gereinigt und geordnet (parallelisiert) und in regelmässiger Anordnung (als Bandkuchen) gespeichert vorliegen, weswegen die Messung von zeitlich wechselnden Störeinflussen verschont bleibt. Einzig zu beachten ist, dass das Faserband nicht in Richtung seiner natürlichen Längsorientierung am Sensor vorbeigeführt wird, sodass Helligkeitsschwankungen auftreten.

Der hier bevorzugte Messort im Prozessablauf ist, wie schon gesagt, auf der Bandablage, genauer im Bandablageoberteil. In Figur 5 ist eine bestimmte, auf den Prozess abgestimmte Beobachtungsstelle für das Messgut in Form einer Messöffnung W angeordnet, welche sich für eine Farbmessung der vorgeschlagenen Art eignet. Eine Kanne 52 zeigt auf dem Kannenboden 51 liegende Bandkuchenlage 56 eines Faserbandes 54 Diese exzentrisch um den Kannendrehpunkt 32 gelegte Lage wird beim Auffüllen der Kanne durch weitere, in Drehrichtung exzentrisch verschobene Lagen überdeckt, sodass der Kannenboden nach wenigen Bandkuchenlagen gänzlich überdeckt ist. Dies ist in der Regel nach weniger als einer Minute Füllzeit der Fall. Die Oberfläche des Bandkuchenstapels besteht dann aus einer makroskopisch komplizierten Ordnung von Faserbandverläufen, die aber, durch die Messöffnung betrachtet, wegen ihrer Gesamtbewegung um ein Drehzentrum stets den gleichen Faserverlauf zeigen und durch die prozessinhärenten Anpressung der Bandkuchenlagen an den Bandablageoberteil für die Messung konditioniert werden.

Die **Figuren 6a und 6b** zeigen eine andere prozesseigene Ablageweise der Faserbänder, bei welcher der Bandwickel um ein erstes und zweites Drehzentrum so abgelegt wird, dass die Faserbänder spiralförmig um ein Zentrum angeordnet werden. Auch hier findet eine Anpressung der Faserbänder durch den Kannenboden gegen den Bandablageoberteil statt.

Im Bandablageoberteil 21 ist, wie in Figur 6a schon gezeigt, die Messöffnung W angeordnet, an welches die oberste Faserbandlage B angepresst und vorbeibewegt wird (siehe Figur 6B). Wie eingangs schon erwähnt, kann die Messöffnung durch bspw. eine Planscheibe verschlossen oder aber offen sein (wobei dann die bandseitigen Lochränder ensprechend abgerundet sind). Solch eine Messöffnung ist, wenn kreisförmig, 5 bis 10 Millimeter im Durchmesser, sodass beide Möglichkeiten in Betracht gezogen werden können: die Minimierung von optischen Grenzflächen durch Weglassen einer Planscheibe oder eine Vergrösserung der Messöffnung, was in der Regel den Einsatz einer Planscheibe erfordert. Es können auch nichtplane optische Mittel wie abbildende Linsen eingesetzt werden. Solche Mittel werden in der CH-Patentanmeldung Nr. 00′786/90-5 beschrieben.

In radialer Richtung zur Drehachse der Kanne kann die Position der Messöffnung so ausgewählt werden, dass die Struktur des komprimierten, unter der Messöffnung vorbeilaufenden Fasergutes am feinsten ist, was in der Regel am Innenrand des gepressten Bandkuchens der Fall ist. Auf diese Weise lässt sich die Messstellen-Position optimieren.

Im Normalbetrieb werden in zeitlichem Abstand von z.B. 10 Sekunden Farbwerte des Kardenbandes gemessen. Der Kannenwechsel unterbricht die Farbmessungen für ca. 5-10% der Zeit, die zum Füllen einer Kanne benötigt wird. Dies ist eine Blindphase im Messablauf bzw. eine Messlücke. Während dieser Messlücke, in der keine Farbmessdaten gewonnen werden können, kann verringert bis aufgehoben werden, in dem auf weiteren Kannenablagen parallel laufender Karden desselben Sortiments weitere Farbsensoren eingesetzt werden. Wird der Kannenwechsel zeitlich so organisiert, dass während des Wechsels von mindestens einem der Sensoren stets Farbdaten gewonnen werden, so ist es möglich, quasikontinuierlich die Farbe des Fasergutes zu messen. Dass alle Kannen miteinander gewechselt werden, ist praktisch auszuschliessen, insbesondere, wenn noch organisatorische Massnahmen bezgl. Zeit des Kannenwechsels dazukommen.

Schon mit einem zweiten Sensor an einer benachbarten Bandablage stört der Kannenwechsel zeitlich kaum mehr. Die Wahrscheinlichkeit, dass beide Bandablagen ihre Kannen gleichzeitig wechseln ist vernachlässigbar gering. Eine zweite Messstelle (oder mehrere) hat ausserdem weitere Vorteile, nämlich Redundanz durch doppelt soviele Messungen wenn gleichzeitig gemessen wird (lediglich während der kurzen Zeit des Kannenwechsels fällt die Redundanz dahin).

## Patentansprüche

1. Verfahren zur on-line Farbmessung an sich kontinuierlich bewegendem Fasergut, insbesondere Faserbändern, unter Verwendung eines Farbmessgerätes, wobei
- das Fasergut an einer Prozessstelle beleuchtet und gemessen wird, an welcher eine prozessinhärente Verdichtung des Fasergutes durch Zusammenführung oder Pressung stattfindet, und
- an der Messstelle eine Lichtdurchführung so angeordnet wird, dass der Prozessablauf nicht beeinflusst wird und durch diese Lichtdurchführung das vom Fasergut senkrecht zur Laufrichtung des Fasergutes rückgestrahlte Licht aufgefangen und ausgewertet wird.

2. Verfahren nach Anspruch 1, wobei als Messstelle eine Prozessstelle gewählt wird, an der das Fasergut, insbesondere Faserband, in sich überlagernden Schichten abgelegt wird.

3. Verfahren nach Anspruch 1, wobei die Messstelle an der Bandablage angeordnet ist und die Oberfläche des gegen den Bandablagenoberteil angepressten Bandwickels in Bewegung gemessen wird.

4. Verfahren nach einem der Ansprüche 1 bis 3, wobei für die Messung ein Farbmessgerät mit einer Xenon-Blitzlampe zur Probenbeleuchtung, mit einem Messsystem, das nur senkrecht zur Probenfläche einfallendes Licht auswertet und mit einer Messelektronik, die Schwankungen der internen Beleuchtung automatisch kompensiert, verwendet wird.

5. Verfahren nach einem der Ansprüche 1 bis 4, wobei das Messgerät periodisch mit einer Eichfarbe geeicht wird.

6. Verfahren nach Anspruch 5, wobei die Eichfarbe dem Material und der Farbe des zu messenden Faserbandes angepasst wird.

7. Verfahren nach einem der Ansprüche 5 oder 6, wobei für die Eichung eine Fläche mit der Eichfarbe unter die stationäre Messsonde bewegt wird, die Messsonde über eine derartige Fläche bewegt wird oder eine derartige Fläche optisch in den Bereich der stationären Messsonde projiziert wird.

8. Verfahren nach einem der Ansprüche 1 bis 7, wobei die Messsonde im Prozess entweder kontinuierlich oder periodisch gereinigt wird.

9. Verfahren nach Anspruch 8, wobei zur Reinigung der Messsonde ein Luftstrom oder ein mechanisches Reinigungsmittel eingesetzt wird.

10. Verfahren nach einem der Ansprüche 8 oder 9, wobei als Reinigungsmittel ein mechanisches Reinigungsmittel eingesetzt wird, das sich über die Messsöffnung der Messsonde bewegt oder über das die Messsonde bewegt wird.

11. Verfahren nach einem der Ansprüche 9 bis 10, wobei als Reinigungsmittel eine Bürste verwendet wird.

12. Verfahren nach einem der Ansprüche 8 bis 11, wobei die Eichung und/oder die Reinigung automatisch gesteuert oder geregelt ausgeführt wird.

13. Verfahren nach Anspruch 4, wobei als Regelkriterien für die Eichung Schwankungen in der Beleuchtungsintensität oder Schwankungen der Temperatur verwendet werden.

14. Verfahren nach einem der Ansprüche 1 bis 13, wobei gegen Helligkeitsschwankungen am Messgut und zur Messung bei gleichem Helligkeitsgrad eine Hilfsmessung vorgenommen wird, mit welcher der Messvorgang gesteuert wird.

15. Verfahren nach Anspruch 14, wobei die Hilfsmessung eine Dichtemessung des Faserbandes ist und die Farbmessung bei einem vorbestimmten Dichtegrad ausgelöst wird.

16. Verfahren nach einem der Ansprüche 4 und 8, wobei vor jeder Eichung eine Reinigung durchgeführt wird.

17. Verfahren nach einem der Ansprüche 1 bis 16, wobei zur Ueberbrückung von Messlücken, bedingt durch einen Kannenwechsel, an mindestens einer weiteren Kannenablage des Sortiments Farbmessungen durchgeführte werden und die gewonnenen Messdaten als Mess-Serie weiterverarbeitet werden.

18. Vorrichtung zur on-line Farbmessung an sich kontinuierlich bewegendem Fasergut, insbesondere Faserbändern, mit einem Farbmessgerät, welche ein Mittel (w) aufweist, mit welchem das Fasergut an einer Prozessstelle beobachtbar ist, an der es komprimiert vorliegt und vorbeibewegt wird, durch welches Mittel das für die Messung nötige Licht auf das Fasergut, insbesondere Faserbänder, gestrahlt und das zurückgestrahlte Licht von einer über dem Mittel (w) angeordneten Messsonde ausgewertet wird.

19. Vorrichtung nach Anspruch 18, bei der das Mittel (W) eine Messöffnung im Bandablagenoberteil ist.

20. Vorrichtung nach Anspruch 19, bei der die Messöffnung (W) durch eine lichtdurchlässige Planscheibe verschlossen ist.

21. Vorrichtung nach Anspruch 18, bei der das Mittel an einem Bandtrichter (22) und die Messsonde senkrecht zum Trichterhalb (23) des Bandtrichters (22) angeordnet ist, und dass der Bandtrichter (23) mit einer Durchgangsöffnung versehen ist, deren Querschnitt die Form eines flachen Rechtecks aufweist, und dessen der Messsonde zugewandte Wandung (24) durchsichtig ist, während die gegenüberliegende Wand (25) eine geeignete Hintergrundfarbe aufweist zur regelmässigen Eichung des Farbmessgeräts.

22. Vorrichtung nach Anspruch 21, bei der die Eichfarbe auf einem auswechselbaren Teil aufgebracht ist.

23. Vorrichtung nach einem der Ansprüche 18 bis 22, bei der die Messsonde auf einem schwenkbaren Träger angeordnet ist und dass die Vorrichtung im Schwenkbereich der Messsonde angebracht eine Eichfläche und Reinigungsmittel umfasst.

24. Vorrichtung nach einem der Ansprüche 20 bis 23, wobei sie eine Luftdüse umfasst, die derart angeordnet ist, dass die Messöffnung der Messsonde dauernd abgeblasen werden kann.

25. Vorrichtung nach einem der Ansprüche 18 bis 24, bei der dem Farbmess-Sensor ein Hilfssensor zugeordnet ist, dessen Ausgangssignale den Farbmess-Sensor beeinflussen.

26. Vorrichtung nach einem der Ansprüche 22 bis 24, bei der zwischen dem Messobjekt und dem Messkopf ein Lichtleiter angeordnet ist.

27. Vorrichtungen an einer Karderielinie nach einem der Ansprüche 18 bis 26 wobei an mindestens zwei Kannenablagen Farbmess-Stellen angeordnet und Mittel vorgesehen sind, zur Zusammenführung der Messdaten beider Mess-Stellen.

## Claims

1. A method for online colour measurement of continuously moving fibre material, particularly slivers, by using a colour measuring device, whereby
- the fibre material is illuminated and measured at a position within the process where a process-inherent compaction of the fibre material by means of joining or pressing is made and
- a throughway for the light is arranged at the measuring position in such a way that the progress of the process is not influenced and that the light reflected from the fibre material vertical to the running direction of the fibre material is caught through said throughway for the light and evaluated.

2. A method as claimed in claim 1, whereby a processing position is selected as measuring position at which the fibre material, particularly the sliver, is deposited in overlapping layers.

3. A method as claimed in claim 1, whereby the measuring position is arranged at the sliver coiler and the surface of the sliver coil pressed against the upper part of the sliver coiler is measured during the movement.

4. A method as claimed in one of the claims 1 to 3, whereby a colour measuring device with a xenon flashlight for the illumination of samples, with a measuring system which only evaluates light impinging vertical to the sample surface and with measuring electronics which automatically compensate the fluctuations of the internal illumination is used.

5. A method as claimed in one of the claims 1 to 4, whereby the measuring device is calibrated periodically with a calibration colour.

6. A method as claimed in claim 5, whereby the calibration colour is adjusted to the material and the colour of the sliver to be measured.

7. A method as claimed in one of the claims 5 or 6, whereby an area with the calibration colour is moved below the stationary measuring probe for the calibration, the measuring probe is moved over such an area or such an area is projected optically into the zone of the stationary measuring probe.

8. A method as claimed in one of the claims 1 to 7, whereby the measuring probe is cleaned during the process either continuously or periodically.

9. A method as claimed in claim 8, whereby an air stream or a mechanical cleaning means is used for cleaning the measuring probe.

10. A method as claimed in one of the claims 8 or 9, whereby a mechanical cleaning means is used as cleaning means which moves over the measuring opening of the measuring probe or over which the measuring probe is moved.

11. A method as claimed in one of the claims 9 to 10, whereby a brush is used as cleaning means.

12. A method as claimed in one of the claims 8 to 11, whereby the calibration and/or the cleaning is carried out automatically in an open-loop or closed-loop controlled manner.

13. A method as claimed in claim 4, whereby fluctuations in the illumination intensity or fluctuations of the temperature are used as control criteria for the calibration.

14. A method as claimed in one of the claims 1 to 13, whereby an auxiliary measurement is made against fluctuations of brightness in the material to be measured and for measurements to made at the same degree of brightness.

15. A method as claimed in claim 14, whereby the auxiliary measurement is a density measurement of the sliver and the colour measurement is initiated at a predetermined degree of density.

16. A method as claimed in one of the claims 4 and 8, whereby a cleaning is carried out prior to each calibration.

17. A method as claimed in one of the claims 1 to 16, whereby colour measurements are made at least in one further can coiler of the assortment for bridging gaps in the measurement caused by can changes and the gained measured data are further processed as series of measurements.

18. An apparatus for online colour measurement of continuously moving fibre material, particularly slivers, with a colour measuring device which is provided with a means (w) with which the fibre material is monitorable at a processing position at which it is present in a compressed form and is moved past said position, by which means the light required for the measurement is beamed onto the fibre material, particularly slivers, and the reflected light is evaluated by a measuring probe arranged above the means (w).

19. An apparatus as claimed in claim 18, wherein the means (w) is a measuring opening in the upper part of the sliver coiler.

20. An apparatus as claimed in claim 19, wherein the measuring opening (W) is enclosed by a light-permeable faceplate.

21. An apparatus as claimed in claim 18, wherein the means is arranged on a sliver funnel (22) and the measuring probe is arranged vertical to the funnel throat (23) of the sliver funnel (22) and the sliver funnel (23) is provided with an opening of passage whose cross section is provided with the shape of a flat rectangle and whose side wall facing the measuring probe (24) is transparent, whereas the opposite wall (25) is provided with a suitable background colour for continuous calibration of the colour measuring device.

22. An apparatus as claimed in claim 21, wherein the calibration colour is applied to an exchangeable part.

23. An apparatus as claimed in one of the claims 18 to 22, wherein the measuring probe is arranged on a swivellable carrier and the apparatus comprises a calibration area and cleaning means which are attached in the pivoting range of the measuring probe.

24. An apparatus as claimed in one of the claims 20 to 23, whereby it comprises an air nozzle which is arranged in such a way that the measuring opening of the measuring probe can be blown over permanently.

25. An apparatus as claimed in one of the claims 18 to 24, wherein an auxiliary sensor is allocated to the colour measuring sensor whose output signals influence the colour measuring sensor.

26. An apparatus as claimed in one of the claims 22 to 24, wherein an optical waveguide is arranged between the measured object and the measuring head.

27. Apparatuses in a carding line as claimed in one of the claims 18 to 26, whereby colour measuring positions are arranged at at least two can coilers and means are provided for combining the measured data of both measuring positions.

## Revendications

1. Procédé servant à la mesure en on-line de la couleur d'une matière fibreuse se déplaçant continuellement, particulièrement des rubans de fibres, en utilisant un appareil de mesure de couleur, dans lequel
- la matière fibreuse est illuminée et mesurée dans un lieu de processus dans lequel une compression de la matière fibreuse, inhérente au processus, est réalisée par rassemblement ou pression, et
- un passage illuminé est disposé d'une manière telle dans le lieu de mesure que le déroulement de processus n'est pas influencé, et la lumière, réfléchie par la matière fibreuse, perpendiculairement au sens de déplacement de la matière fibreuse et à travers ce passage illuminé, est captée et exploitée.

2. Procédé selon revendication 1,
dans lequel un lieu de processus est choisi comme lieu de mesure où la matière fibreuse, particulièrement un ruban de fibres, est déposée en couches se superposant.

3. Procédé selon revendication 1,
dans lequel le lieu de mesure est disposé dans la dépose de ruban, et la surface de la spire de ruban, pressée contre la partie supérieure de la dépose de ruban, est mesurée en mouvement.

4. Procédé selon l'une des revendications 1 à 3,
dans lequel un appareil de mesure de couleur, ayant une lampe éclair Xenon pour l'illumination de l'échantillon, avec un système de mesure qui n'exploite que la lumière tombant perpendiculairement sur la surface de l'échantillon, et avec une électronique de mesure qui compense automatiquement les variations de l'illumination interne, est utilisé pour faire la mesure.

5. Procédé selon l'une des revendications 1 à 4,
dans lequel l'appareil de mesure est étalonné périodiquement avec une couleur d'étalonnage.

6. Procédé selon revendication 5,
dans lequel la couleur d'étalonnage est adaptée à la matière et à la couleur du ruban de fibres à mesurer.

7. Procédé selon l'une des revendications 5 ou 6,
dans lequel, pour réaliser l'étalonnage, une surface ayant la couleur d'étalonnage est mise en mouvement sous la sonde de mesure stationnaire, la sonde de mesure est mise en mouvement au-dessus d'une telle surface, ou une telle surface est projetée d'une manière optique dans la zone de la sonde de mesure stationnaire.

8. Procédé selon l'une des revendications 1 à 7,
dans lequel la sonde de mesure est nettoyée soit d'une manière continue ou périodique pendant le processus.

9. Procédé selon revendication 8,
dans lequel un courant d'air ou un moyen de nettoyage mécanique est utilisé pour le nettoyage de la sonde de mesure.

10. Procédé selon l'une des revendications 8 ou 9,
dans lequel un moyen de nettoyage mécanique est utilisé comme moyen de nettoyage, qui se déplace au-dessus de l'ouverture de mesure de la sonde de mesure, ou au-dessus duquel la sonde de mesure est mise en mouvement.

11. Procédé selon l'une des revendications 9 à 10,
dans lequel une brosse est utilisée comme moyen de nettoyage.

12. Procédé selon l'une des revendications 8 à 11,
dans lequel l'étalonnage et/ou le nettoyage est réalisé en asservissement ou en régulation automatique.

13. Procédé selon revendication 4,
dans lequel les variations dans l'intensité d'illumination ou les variations de température sont utilisées comme critères de régulation pour l'étalonnage.

14. Procédé selon l'une des revendications 1 à 13,
où une mesure auxiliaire est réalisée contre les variations de brillance dans la matière à mesurer et pour la mesure avec le même degré de brillance, au moyen de laquelle le processus de mesure est asservi.

15. Procédé selon revendication 14,
dans lequel la mesure auxiliaire est une mesure de la densité du ruban de fibres, et la mesure de la couleur est déclenchée lors d'un degré de densité prédéterminé.

16. Procédé selon l'une des revendications 4 et 8,
dans lequel un nettoyage est réalisée avant chaque étalonnage.

17. Procédé selon l'une des revendications 1 à 16,
dans lequel des mesures de couleur sont réalisées sur au moins une autre mise en pot de ruban de l'assortiment, dans le but de surmonter des trous de mesure conditionnés par un changement de pots, et les données de mesure ainsi acquises sont traitées ultérieurement comme série de mesures.

18. Dispositif servant à la mesure en on-line de la couleur d'une matière fibreuse se déplaçant continuellement, particulièrement des rubans de fibres, avec un appareil de mesure de couleur qui possède un moyen (W), à l'aide duquel la matière fibreuse peut être observée dans un lieu de processus, dans lequel la matière se présente à l'état comprimé et devant lequel elle est déplacée, moyen au travers duquel la lumière, nécessaire pour la mesure, est envoyée sur la matière fibreuse, particulièrement des rubans de fibres, et la lumière réfléchie est exploitée par une sonde de mesure disposée au-dessus du moyen (W).

19. Dispositif selon revendication 18,
dans lequel le moyen (W) est une ouverture de mesure dans la partie supérieure de la dépose de ruban.

20. Dispositif selon revendication 19,
dans lequel l'ouverture de mesure (W) est fermée par un disque plat perméable à la lumière.

21. Dispositif selon revendication 18,
dans lequel le moyen est disposé sur un entonnoir de ruban (22), et la sonde de mesure est disposée d'une manière perpendiculaire par rapport à la moitié d'entonnoir (23) de l'entonnoir de ruban (22), et la moitié d'entonnoir de ruban (23) est pourvue d'une ouverture de passage dont la section possède la forme d'un rectangle plat, et dont la paroi (24) faisant face à la sonde de mesure est transparente, alors que la paroi (25) située à l'opposé, possède une couleur de fond appropriée pour l'étalonnage régulier de l'appareil de mesure de couleur.

22. Dispositif selon revendication 21,
dans lequel la couleur d'étalonnage est amenée sur une partie interchangeable.

23. Dispositif selon l'une des revendications 18 à 22,
dans lequel la sonde de mesure est disposée sur un porteur basculant, et le dispositif comprend, dans la zone de basculement de la sonde de mesure, une surface d'étalonnage et des moyens de nettoyage.

24. Dispositif selon l'une des revendications 20 à 23,
qui comprend une buse pneumatique disposée de telle manière que l'ouverture de mesure de la sonde de mesure peut être soufflée continuellement.

25. Dispositif selon l'une des revendications 18 à 24,
dans lequel un détecteur auxiliaire est adjoint au détecteur de mesure de couleur, dont les signaux de sortie influencent le détecteur de mesure de couleur.

26. Dispositif selon l'une des revendications 22 à 24,
dans lequel un conducteur de lumière est disposé entre l'objet à mesurer et la tête de mesure.

27. Dispositifs dans une ligne de cardes selon l'une des revendications 18 à 26,
où des lieux de mesure de couleur sont disposés dans au moins deux mises en pot de ruban, et des moyens sont prévus pour rassembler les données de mesure des deux lieux de mesure.
